# EUROPEAN PATENT SPECIFICATION

(11) **EP 3 851 395 B1**
(45) Date of publication and mention of the grant of the patent: **29.07.2026**
(21) Application number: 21275006.1
(22) Date of filing: 17.01.2021
(51) Int. Cl.: B65D 63/10, B65D 71/00

(54) **RETENTION MEANS**
HALTEMITTEL
MOYENS DE RÉTENTION

(30) Priority: 17.01.2020 GB 202000709
(43) Date of publication of application: 21.07.2021
(73) Proprietor: Detectamet Limited, Pocklington, Y042 1NR (GB)
(72) Inventor: Smith, Sean Ronald, Richmond Virginia, 23059 (US)
(74) Representative: Wood, Graham

(56) References cited:
- EP-A1- 3 017 699
- EP-A2- 1 843 070
- JP-A- 2003 073 531
- US-A- 2 908 122
- US-A- 6 138 327

## Description

The invention to which this application relates is to improvements to apparatus of a type which can be used to more securely locate a load of items or goods on a pallet and thereby effectively form the said items or goods as a single integral package which can be moved when located on the pallet, with the pallet providing the base support and also acting as the interface between the movement apparatus such as a forklift truck, and the pallet load.

The use of pallets to move loads of goods between different locations, for example, within a manufacturing facility and/or from the manufacturing facility to a location of use or sale, is well-known. Also well-known is that if the items which are placed together to form the load on the pallet are unstable, then during storage and/or movement, items can fall from the pallet which means that time then has to be taken to relocate the items as part of the load, can mean that items are missing from the load when it is subsequently delivered to the required location and/or can represent a hazard or risk to other personnel in the vicinity of the pallet load when the same starts to move and items fall.

In order to avoid this problem, or at least reduce the risk of the pallet load from being unstable, it is known to provide retaining means which pass round the sidewalls of the pallet load and thereby maintain the sidewalls in respective, substantially vertical planes, perpendicular to the horizontal plane of the pallet base. These retaining means can be temporary in nature such as, for example, in the form of cardboard or thin plastic sheet material wrapped around the same or may be more environmentally friendly and reusable apparatus known as pallet bands.

The pallet bands, in one form, can be expanded and placed in position around the pallet sidewalls and then reduced in size and/or are tightened to a required degree to secure the items in the load together. When it is required to move the items from the load and/or from the pallet, the pallet bands can be released and then reused on another load. This therefore means that the relatively wasteful use of pallet wrapping sheet material, which is provided for a single use only, is avoided and hence prevents the pallet wrapping material from entering the waste chain.

The pallet bands can be made of silicone, rubber or polythene and typically have a degree of elasticity so as to allow the same to be placed in position and, in one embodiment, the elasticity may be sufficient to allow the required retention force to be exerted on the walls of the load when formed so that typically a number of said bands at spaced locations act to retain the items and the load in the required position. In another embodiment, and which allows greater freedom in the materials used to form the band, tightening means such as a ratchet assembly may be provided to allow the pallet band to be tightened around the pallet load sidewalls once placed in position.

However, the potential use of reusable bands in certain environments, such as a food environment, can create problems in that the band represents a potential contamination source which is introduced into the food environment in an uncontrolled manner and which, if the same breaks, or is discarded, or is damaged, represents an opportunity for the band, or a fragment thereof, and hence the material from which the band has been formed, to enter the food manufacturing process and/or the foodstuff itself. Thus, at present, while the use of bands of this type is recognised as being environmentally beneficial and can be provided in a form which is suitable for use in a non-contaminating manner in terms of the material from which the pallet band is formed, the applicant has recognised that there is a risk of potential contamination of the food manufacturing process and/or food products.

Patent number JP2003073531 discloses a biodegradable binding material and method of production and requires that the binding material does not include metallic elements. Patent numbers EP1017699 and EP1843070 both disclose a plastic cable tie with detectable materials. Patent number US2908122 relates to a method of processing and packaging, particularly cuboid loads of wooden blocks placed on a pallet using flexible metallic bands around sidewalls of said loads.

The aim of the present invention is therefore to provide a means whereby the presence of a pallet band and/or fragment of a pallet band can be determined and thereby allow the same to be removed from an environment in which the same would represent a potential hazard such as a food manufacturing environment, whilst ensuring that the advantages of use of the pallet bands can still be achieved.

In a first aspect of the invention, there is provided a reusable elastic band for use in retaining a load of items in a defined position on a pallet, said elastic band provided to be located with respect to sidewalls of the said load, the said elastic band provided in the form of a loop of a flexible and resilient material that has a degree of elasticity such that in use the elastic band is movable from a first condition to a second, extended, condition of a size to allow the same to be positioned around said sidewalls of said load and, when in position, the release of the elastic band allows the band to move to a third condition in which the same has decreased in size and exerts a gripping force on said sidewalls of said load and said elastic band further includes one or more materials evenly dispersed at a predetermined density within the flexible and resilient material as an integral part thereof which render the said elastic band detectable by X-ray and/or metal detection apparatus when said elastic band is within a predetermined range of said detection apparatus so as to allow the presence of said elastic band, or a fragment thereof greater than a predetermined size present as a result of breaking or damage to the elastic band, to be detected when said elastic band is in the said first condition and when released from said third condition.

In one embodiment, the said one or more materials include particles of a metal or metal alloy of a form which is detectable by metal detection apparatus.

In one embodiment, the said one or more materials include a material which is capable of detection by X-ray detection apparatus and in one embodiment, the material is a barium or similar material.

Typically, the range and sensitivity of the detection apparatus is as defined by Health & Safety Standards and may vary from region-to-region and the elastic band and in particular, the quantity and form of the detectable materials which are provided as part of the elastic band, is selected to meet the detection requirements for that location and/or requirements with regard to the size of a fragment of the elastic band which is required to be detected and at which distance from the detection apparatus. It will therefore be appreciated that the form of the detectable materials in the elastic band and quantity of the same, can be varied to suit particular usage requirements. In one embodiment the detection range is up to 1 metre and the fragment size is greater than 1cm²

Typically, the elastic band is selectively positioned around the sidewalls of the load of items so as to retain the sidewalls in substantially vertical planes during storage of the said load and the movement of the said load between different locations.

The load of items is located on a pallet to form a pallet load. Typically the pallet is formed of wood, plastics or cardboard material and which forms the base of the load and provides location means via which movement apparatus, such as a forklift truck, can engage with the load and hence move the same between the required locations.

In one embodiment, the band may be provided in a range of different sizes and the particular size of band which is used and/or number of bands used are selected with regard to the particular load size.

In one embodiment, the elastic band is colourable, such that the colour acts as an indication means to allow different types, uses, or any other feature of the elastic band to be distinguished from other pallet bands.

In one embodiment, the indication means may be provided to identify the particular uses which are allowable for the elastic band

In another embodiment, the indication means is used to indicate whether the elastic band is metal detectable, X-ray detectable or capable of X-ray and metal detection.

In one embodiment the indication means may be the selection of one of a range of colours for the pallet bands. The selection of the particular indication means, such as the selection of a colour, allow the elastic band to be colour coded with regard to, for example, the particular location from which the load originates, a particular time at which the load has been formed and/or moved and/or a particular sector of workforce, with each sector being provided with elastic bands of different colours to use. In these embodiments, the aim is to allow a forensic analysis to be performed if, for example, a elastic band, or a fragment thereof, is subsequently detected to be present in the foodstuff manufacturing process or foodstuff and thereby allow an indication of the time and/or location from which the contaminating elastic band or fragment thereof, originates and thereby allows action to be taken to prevent a repeat occurrence.

In one embodiment the material from which the elastic band is manufactured is or includes an antimicrobial feature.

In one embodiment the elastic band is biodegradable.

Specific embodiments of the invention are now described with reference to the accompanying drawings wherein:
Figure 1 illustrates a pallet load formed using a elastic band in accordance with one embodiment of the invention;
Figure 2 illustrates a elastic band in accordance with one embodiment of the invention; and Figure 3 illustrates a cross-section along line AA of the elastic band of Figure 2.

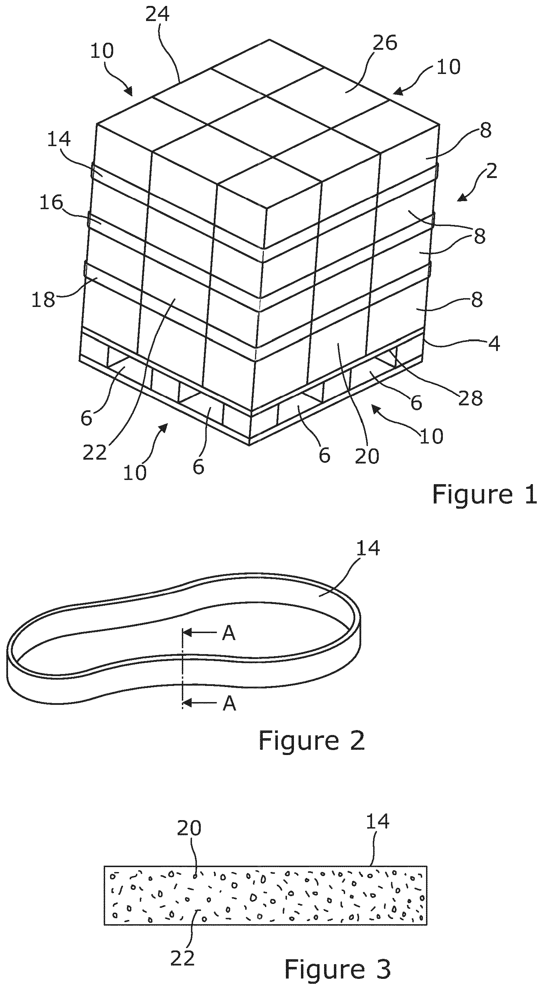

Referring firstly to Figure 1, there is illustrated a pallet load 2 formed in accordance with one embodiment of the invention.

In this embodiment, the pallet load 2 comprises a pallet 4 which forms the base of the load and which includes a series of location means 6 for the receipt of the prongs of a tall lift apparatus in a conventional manner so as to allow the load to be lifted and moved between different locations as and when required.

The remainder of the pallet load 2 is formed of a series of items stacked on the base and which in this case are packages of foodstuff containers, and each package 8 is placed in position with respect to the packages so as to form the overall pallet load 2 of the combination of packages 8 and which is typically cuboid in shape.

Whilst, at the time of placing the packages in position to form the pallet load the same can appear to be securely in position, it is found that during storage and/or movement, the packages 8 may move and the pallet load 2 become unstable and therefore in accordance with the invention, retention means, in this case in the form of three pallet bands 14, 16, 18, are placed at spaced intervals around the sidewalls of the load and act to provide a gripping force on the sidewalls 20, 22, 24, 26 as indicated by arrows 10 to effectively push opposing sidewalls towards each other and thereby act to maintain the pallet load in position, with the sidewalls 20, 22 24, 26 being in a substantially vertical plane and perpendicular to the upper surface 28 of the pallet base 4. This therefore allows the load to be maintained as a unitary item during storage and/or movement.

In the example shown, each pallet band 14, 16, 18 is formed as a continuous band and may for example be formed of a silicone material so as to allow the same to be capable of being used in the food industry. It will be appreciated that at the time of delivery of the pallet load 2 to the end user, it will be necessary to separate the packages 8 and provide the same for the required use. It will also be appreciated that at this point, the pallet bands 14, 16, 18 also have to be removed and, whilst the intention is that these bands are reused, it is possible and especially in relatively pressurised, high throughput, environments, that the bands are discarded, or inadvertently lost, or are damaged so that there may be fragments of the band material present at the location of use of the containers. It will also be appreciated that if these containers are for use in the food industry, then the location at which this occurs, will be close to the food manufacturing process and so the discarding of the bands and/or fragments of the same at this location thereby represents a risk that the same will enter the food manufacturing process and become a hazard to the end consumer of the food products.

As a result, and in accordance with the invention, and as illustrated in Figure 3, the band, in addition to being formed of silicone material and/or any other material which is required to provide the effective use of the same in retaining the load in position, also include one or more materials 20,22 which allow the bands and fragments thereof to be metal detectable and/or X-ray detectable.

Typically, the X-ray and metal detection will occur using apparatus which is provided on the food production line and most typically, near the end of the same and thereby any band or fragment thereof, which has inadvertently entered the food production process of foodstuff itself, can now be identified as a result of the provision of the material which allows the same to be metal and/or X-ray detectable.

Typically, the same can be rendered metal detectable by the inclusion therein of a quantity of metal particles 20 with the particular metal which is selected, being one which is found to be particularly effective at being detected and suitable for use with metal detection apparatus and the particles are typically provided in the material used to form the band at the time of formation of the band so that typically the metal particles are dispersed into the silicone material used to form the band when the same is in a liquid state and thereby ensure relatively even dispersal of the metal particles and at a required density throughout the material.

Alternatively, or in addition, the material used to form the retaining band can also include a material therein such as barium 22, which is capable of rendering the pallet band detectable by X-ray apparatus and once again the material is added at the time of formation of the band so as to form an integral part of the same.

Typically, if the colour of the band is important for the use of the same for the purposes as previously described, the selected colour pigment is also added to the material at the time of manufacture of the band so that the same has the required colour.

## Claims

1. A reusable elastic band (14) for use in retaining a load (2) of items (8) in a defined position on a pallet (4), said elastic band (14) provided to be located with respect to sidewalls (20, 22, 24) of the said load (2), the said elastic band (14) provided in the form of a loop of a flexible and resilient material that has a degree of elasticity such that in use the elastic band is movable from a first condition to a second, extended, condition of a size to allow the same to be positioned around said sidewalls of said load and, when in position, the release of the elastic band allows the band to move to a third condition in which the same has decreased in size and exerts a gripping force on said sidewalls of said load and said elastic band further includes one or more materials (20, 22) evenly dispersed at a predetermined density within the flexible and resilient material as an integral part thereof which render the said elastic band detectable by X-ray and/or metal detection apparatus when said elastic band is within a predetermined range of said detection apparatus so as to allow the presence of said elastic band (14), or a fragment thereof greater than a predetermined size present as a result of breaking or damage to the elastic band, to be detected when said elastic band is in the said first condition and when released from said third condition.

2. A reusable elastic band (14) according to claim 1 **characterised in that** the said one or more materials include particles (20, 22) of a metal or a metal alloy of a form which is detectable by metal detection apparatus.

3. A reusable elastic band (14) according to any of claims 1 or 2 **characterised in that** said one or more materials (20, 22) include barium and/or iodine to render the retention means capable of detection by X-ray detection apparatus.

4. A reusable elastic band (14) according to any of the preceding claims **characterised in that** the density of said metal and/or X-ray detectable material (20, 22) which is included in the elastic band (14) is selected with respect to the predetermined size of fragment of the elastic band (14) which is desired to be detectable when within the predetermined range of the detection apparatus.

5. A reusable elastic band (14) according to any of the preceding claims **characterised in that** the said predetermined size of the fragment is 1cm² and the detection range is up to 1 metre from the detection means of the apparatus.

6. A reusable elastic band (14) according to claim 1 **characterised in that** the flexible and resilient material includes a colour pigment, such that, in use, the colour acts as an indication means which is matched to a table indicating a characteristic attributed to each colour, and the selection of the particular indication means used on the elastic band (14) is made with reference to any or any combination of: use of the elastic band, user of the elastic band, level and/or type of detectability of the elastic band and/or any other feature of the elastic band such that the indication means selected distinguishes the said elastic band from other elastic bands.

7. A reusable elastic band (14) according to any of the preceding claims **characterised in that** the elastic band (14) is manufactured from or includes an antimicrobial material and/or formed from a biodegradable material.

## Patentansprüche

1. Wiederverwendbares elastisches Band (14) zur Verwendung beim Halten einer Ladung (2) von Gegenständen (8) in einer definierten Position auf einer Palette (4), wobei das genannte elastische Band (14) dafür vorgesehen ist, mit Bezug auf Seitenwände (20, 23, 24) der genannten Ladung (2) angeordnet zu sein, wobei das genannte elastische Band (14) in Form einer Schlinge aus einem flexiblen und nachgiebigen Material bereitgestellt ist, das einen solchen Elastizitätsgrad aufweist, dass das elastische Band im Gebrauch von einem ersten Zustand in einen zweiten, erweiterten Zustand mit einer Größe bewegbar ist, die ermöglicht, dass dasselbe um die genannten Seitenwände der genannten Ladung positioniert wird, und, wenn positioniert, die Freigabe des elastischen Bands es ermöglicht, dass sich das Band in einen dritten Zustand bewegt, in dem dasselbe an Größe verloren hat und eine Spannkraft auf die genannten Seitenwände der genannten Ladung ausübt, und das genannte elastische Band ferner ein oder mehrere Materialien (20, 22) beinhaltet, die mit einer vorbestimmten Dichte innerhalb des flexiblen und nachgiebigen Materials als Bestandteil davon gleichmäßig verteilt sind, wodurch das genannte elastische Band durch Röntgenstrahlen- und/oder Metalldetektionsvorrichtung erkennbar gemacht wird, wenn das genannte elastische Band sich innerhalb eines vorbestimmten Erfassungsbereichs der genannten Detektionsvorrichtung befindet, um zu ermöglichen, dass das Vorhandenseins des genannten elastischen Bands (14) oder eines infolge von Bruch oder Beschädigung des elastischen Bands vorhandenen Bruchstücks davon, das größer als eine vorbestimmte Größe ist, erkannt wird, wenn das genannte elastische Band in dem genannten ersten Zustand ist und wenn es aus dem genannten dritten Zustand freigegeben wird.

2. Wiederverwendbares elastisches Band (14) nach Anspruch 1, **dadurch gekennzeichnet, dass** das genannte eine bzw. die genannten mehreren Materialien Teilchen (20, 22) aus einem Metall oder einer Metalllegierung einer Form beinhalten, die durch eine Metalldetektionsvorrichtung erkennbar ist.

3. Wiederverwendbares elastisches Band (14) nach Anspruch 1 oder 2, **dadurch gekennzeichnet, dass** das genannte eine bzw. die genannten mehreren Materialien (20, 22) Barium und/oder Iod beinhalten, um das Haltemittel durch eine Röntgenstrahlen-Detektionsvorrichtung erkennbar zu machen.

4. Wiederverwendbares elastisches Band (14) nach einem der vorhergehenden Ansprüche, **dadurch gekennzeichnet, dass** die Dichte des genannten durch Metall- und /oder Röntgenstrahlendetektion erkennbaren Materials (20, 22), das in dem elastischen Band (14) enthalten ist, mit Bezug auf die vorbestimmte Bruchstückgröße des elastischen Bands (14), die erkennbar sein soll, wenn es sich innerhalb des vorbestimmten Erfassungsbereichs der Detektionsvorrichtung befindet, ausgewählt wird.

5. Wiederverwendbares elastisches Band (14) nach einem der vorhergehenden Ansprüche, **dadurch gekennzeichnet, dass** die genannte vorbestimmte Größe des Bruchstücks 1 cm² ist und der Erfassungsbereich bis zu 1 m vom Detektionsmittel der Vorrichtung beträgt.

6. Wiederverwendbares elastisches Band (14) nach Anspruch 1, **dadurch gekennzeichnet, dass** das flexible und nachgiebige Material ein Farbpigment beinhaltet, so dass die Farbe im Gebrauch als ein Kennzeichnungsmittel wirkt, das einer Tabelle zugeordnet ist, die eine jeder Farbe zugeschriebene Eigenschaft angibt, und die Auswahl des jeweiligen Anzeigemittels, das an dem elastischen Band (14) verwendet wird, mit Bezug auf jedes oder jede beliebige Kombination der folgenden getroffen wird: Verwendung des elastischen Bands, Benutzer des elastischen Bands, Niveau und/oder Art der Nachweisbarkeit des elastischen Bands und/oder eines anderen Merkmals des elastischen Bands, so dass das ausgewählte Kennzeichnungsmittel das genannte elastische Band von anderen elastischen Bändern unterscheidet.

7. Wiederverwendbares elastisches Band (14) nach einem der vorhergehenden Ansprüche, **dadurch gekennzeichnet, dass** das elastische Band (14) aus einem antimikrobiellen Material angefertigt ist oder ein antimikrobielles Material beinhaltet und/oder aus einem biologisch abbaubaren Material hergestellt ist.

## Revendications

1. Bande élastique réutilisable (14) pour une utilisation dans la retenue d'une charge (2) d'articles (8) dans une position définie sur une palette (4), ladite bande élastique (14) étant fournie pour être placée par rapport à des parois latérales (20, 22, 24) de ladite charge (2), ladite bande élastique (14) étant fournie sous la forme d'une boucle en un matériau flexible et résilient qui a un certain degré d'élasticité de telle sorte, qu'en utilisation, la bande élastique puisse être déplacée depuis une première condition jusqu'à une deuxième condition, étendue, ayant une taille permettant à celle-ci d'être positionnée autour desdites parois latérales de ladite charge et, lorsqu'elle est en position, la libération de la bande élastique permet à la bande d'être déplacée jusqu'à une troisième condition dans laquelle celle-ci est réduite en taille et exerce une force de préhension sur lesdites parois latérales de ladite charge et ladite bande élastique inclut en outre un ou plusieurs matériaux (20, 22) dispersés uniformément suivant une densité prédéterminée au sein du matériau flexible et résilient en tant que partie intégrante de celui-ci, rendant ainsi ladite bande élastique détectable aux rayons X et/ou par un appareil de détection de métaux lorsque ladite bande élastique se trouve dans les limites d'une portée prédéterminée dudit appareil de détection de sorte à permettre à ce que la présence de ladite bande élastique (14), ou d'un fragment de celle-ci plus grand qu'une taille prédéterminée présente à la suite d'une cassure ou d'un endommagement de la bande élastique, puisse être détecté/e lorsque ladite bande élastique se trouve dans ladite première condition et lorsqu'elle est libérée de ladite troisième condition.

2. Bande élastique réutilisable (14) selon la revendication 1 **caractérisée en ce que** lesdits un ou plusieurs matériaux incluent des particules (20, 22) d'un métal ou d'un alliage métallique ayant une forme qui est détectable par un appareil de détection de métaux.

3. Bande élastique réutilisable (14) selon n'importe laquelle des revendications 1 ou 2 **caractérisée en ce que** lesdits un ou plusieurs matériaux (20, 22) incluent du baryum et/ou de l'iode pour rendre les moyens de rétention aptes à être détectés par un appareil de détection à rayons X.

4. Bande élastique réutilisable (14) selon n'importe lesquelles des revendications précédentes **caractérisée en ce que** la densité dudit métal et/ou matériau détectable par rayons X (20, 22) qui est inclus dans la bande élastique (14) est sélectionnée par rapport à la taille prédéterminée du fragment de la bande élastique (14) que l'on souhaite être détectable lorsqu'elle se trouve dans les limites de la portée prédéterminée de l'appareil de détection.

5. Bande élastique réutilisable (14) selon n'importe lesquelles des revendications précédentes **caractérisée en ce que** ladite taille prédéterminée du fragment est de 1 cm² et la portée de détection va jusqu'à 1 mètre à partir du moyen de détection de l'appareil.

6. Bande élastique réutilisable (14) selon la revendication 1 **caractérisée en ce que** le matériau flexible et résilient inclut un pigment de couleur de telle sorte, qu'en utilisation, la couleur agisse en tant que moyen d'indication qui est assorti à une table indiquant une caractéristique attribuée à chaque couleur, et la sélection du moyen d'indication particulier utilisé sur la bande élastique (14) est effectuée par référence à n'importe quel élément ou n'importe quelle combinaison d'éléments parmi : utilisation de la bande élastique, utilisateur de la bande élastique, niveau et/ou type de détectabilité de la bande élastique et/ou n'importe quelle autre caractéristique de la bande élastique de telle sorte que le moyen d'indication ayant été sélectionné puisse faire la distinction entre ladite bande élastique et d'autres bandes élastiques.

7. Bande élastique réutilisable (14) selon n'importe lesquelles des revendications précédentes **caractérisée en ce que** la bande élastique (14) est fabriquée en, ou inclut, un matériau antimicrobien et/ou est formée à partir d'un matériau biodégradable.
